# EUROPÄISCHE PATENTSCHRIFT

(11) **EP 0 720 718 B1**
(45) Veröffentlichungstag und Bekanntmachung des Hinweises auf die Patenterteilung: **23.07.1997**
(21) Anmeldenummer: 94930142.8
(22) Anmeldetag: 12.10.1994
(51) Int. Cl.: F24J 2/00, F24J 2/40, E04B 1/76

(54) **AUSSENWANDELEMENT FÜR GEBÄUDE, INSBESONDERE PANEEL IM BRÜSTUNGSBEREICH EINER GEBÄUDEWAND**
OUTER WALL ELEMENT FOR BUILDINGS, IN PARTICULAR WAINSCOT PANEL FOR THE BREASTWORK AREA OF THE WALL OF A BUILDING
ELEMENT EXTERIEUR DE PAROI POUR BATIMENTS, NOTAMMENT PANNEAUX DE LAMBRIS POUR RAMBARDES DE PAROIS DE BATIMENTS

(30) Priorität: 13.10.1993 DE 4334851
(43) Veröffentlichungstag der Anmeldung: 10.07.1996
(73) Patentinhaber: Norsk Hydro a.s., 0257 Oslo 2 (NO)
(72) Erfinder: Schulz, Harald, D-89358 Ettenbeuren (DE)
(74) Vertreter: Fay, Hermann, Dipl.-Phys. Dr.
(86) Internationale Anmeldenummer: DE9401196
(87) Internationale Veröffentlichungsnummer: WO9510740

(56) Entgegenhaltungen:
- EP-A- 0 016 337
- EP-A- 0 473 859
- WO-A-82/03100
- AT-B- 359 238
- CH-A- 678 203
- DE-A- 3 931 594
- GB-A- 2 054 004
- INTERNATIONAL JOURNAL OF SOLAR ENERGY, Bd.11, Nr.1/2, 1992, NEW YORK Seiten 117 - 134 WITTWER 'transparent insulation materials and their application in active and passive systems'
- SOLAR ENERGY, Bd.50, Nr.5, Mai 1993, ELMSFORD,US Seiten 407 - 414 BECK ET AL 'thermochromic gels for control of insolation'
- BAUPHYSIK, Bd.9, Nr.5, 1987, BERLIN DE Seiten 213 - 217 GERTIS 'AUSSENWÄNDE MIT TRANSPARENTEN WÄRMEDÄMMSTOFFEN'
- SOLAR ENERGY, Bd.49, Nr.5, 1992, ELMSFORD,US Seiten 413 - 427 BRAUN ET AL 'TRANSPARENT INSULATION OF BUILDING FACADES-STEPS FROM RESEARCH TO COMMERCIAL APPLICATIONS'

## Beschreibung

Gegenstand des Patentes ist ein Außenwandelement für Gebäude, insbesondere Brüstung oder Paneel im Brüstungsbereich einer Gebäudewand, gemäß dem Patentanspruch 1.

Fassadenbekleidungen, die der passiven Nutzung der Solarenergie an den opaken Teilen der Gebäudehülle dienen, sind aus WO-82/03 100 als nächstkommendem Stand der Technik bekannt. Dort wird anhand der Fig. 1 ein Außenwandaufbau beschrieben, bei dem zwischen einer transparenten außenseitigen Wandschale und der massiven Wand eine an die außenseitige Wandschale angrenzende transparente äußere Wärmedämmschicht und an der nach außen gewandten Seite der Wand eine Isolierschicht vorgesehen ist. Letztere ist von der transparenten äußeren Wärmedämmschicht durch eine die Sonnenstrahlung absorbierende Schicht getrennt. Die in letzterer entstehende Wärme wird durch die Isolierschicht in die Wand abgeleitet. Um Überhitzungen der absorbierenden Schicht und der Isolierschicht zu vermeiden, besteht die Isolierschicht aus einem Material, dessen Wärmeleitfähigkeit als Funktion der Temperatur sehr erheblich veränderlich ist. Dazu enthält das Material einen normalerweise flüssigen Wärmeträger, der auf der warmen Seite der Isolierschicht verdampft. Der Dampf diffundiert durch die Poren des Materials zur kalten Schichtseite, wo er unter Wärmeabgabe an die Wand kondensiert. Das Kondensat gelangt, beispielsweise durch Kapillarwirkung, wieder zurück zur warmen Schichtseite, wodurch sich ein Kreislauf des einmal flüssigen, einmal dampfförmigen Wärmeträgers ergibt und die Wärme hauptsächlich von außen nach innen transportiert wird. Da sich die Wärmeleitfähigkeit mit wachsender Temperatur sehr schnell und erheblich vergrößert, wird mit steigender Sonneneinstrahlung unverhältnismäßig mehr Wärme aus der absorbierenden Schicht durch die Isolierschicht in die massive Wand abgeführt, so daß die Temperatur an der absorbierenden Schicht entsprechend geringer ansteigt, dadurch aber die Wand auf der Gebäudeinnenseite wärmer als erwünscht werden kann. Weiter ist eine Fassadenbekleidung ähnlichen Aufbaus aus E-A-O 362 242 bekannt. Um dabei zu verhindern, daß durch einfallende Sonnenstrahlung im Inneren des Außenwandelements materialzerstörende Überhitzungen entstehen, ist die innere Wärmedämmschicht etwas transluzent mit einem Transmissionsgrad von weniger als 10 % und einem Absorptionsgrad von mehr als 15 % ausgebildet, so daß die Absorption der einfallenden Sonnenstrahlung innerhalb der Wärmedämmschicht über einen vergleichsweise dicken Schichtbereich erfolgt. Die Wärmedämmschicht muß dabei insgesamt so dick sein, daß sich bei nutzbarer Sonneneinstrahlung in der Wärmedämmschicht ein Temperaturprofil einstellt, dessen maximaler Wert innerhalb der Dämmschicht zwischen deren äußerer und innerer Begrenzungsfläche liegt. Dies kann, besonders bei zu erwartender starker Sonneneinstrahlung, eine große Dicke der inneren Wärmedämmschicht erfordern und zu einer Bautiefe des Außenwandelements führen, die größer ist, als die baustatischen Notwendigkeiten erfordern.

Aus CH-A-678 203 ist ein Außenwandaufbau bekannt, bei dem eine Außenmauer mit einer äußeren transparenten Wärmedämmschicht isoliert und durch eine vorgehängte Wetterschutzplatte aus transparentem Material geschützt ist. Die Außenmauer trägt auf der der äußeren Wärmedämmschicht zugewandten Oberfläche unmittelbar eine die Sonnenstrahlung absorbierende dunkle Beschichtung. Eine innere Wärmedämmschicht zwischen dieser Beschichtung und der Außenwand fehlt. Überhitzungen im Wandaufbau werden durch die Wetterschutzplatte vermieden, die im montierten Zustand die Strahlung der tiefstehenden Wintersonne besser als die Strahlung der hochstehenden Sommersonne durchläßt. Dazu ist die Oberfläche der Wetterschutzplatte reliefartig geformt mit zwei in unterschiedlichen Richtungen orientierten Teilflächen, von welchen die einen transparent, die anderen mit einer lichtundurchlässigen Farbschicht bedeckt sind, was im Ergebnis eine mit der Einfallsrichtung der Sonnenstrahlung veränderliche Abschattung bewirkt. Eine glattflächige Außenverglasung ist mit solchen Wetterschutzplatten nicht möglich.

Aus der Literaturstelle "Thermochromic Gels for Control of Insulation" in der Zeitschrift Solar Energy, Band 50, Nr. 5, Mai 1993, Seite 407-414 ist ein Außenwandaufbau bekannt, bei dem ebenfalls die die Strahlung absorbierende Beschichtung unmittelbar auf die massive Außenwand aufgebracht, zwischen der Beschichtung und der Wand also wiederum keine innere Wärmedämmschicht vorhanden ist. Die außenseitige Wandschale, die von der absorbierenden Schicht durch eine transparente äußere Wärmedämmschicht getrennt ist, besitzt thermochrome Schichten, die den Strahlungsdurchlaß temperaturabhängig beeinflussen, so daß bei Überschreiten einer charakteristischen Temperatur der Strahlungsdurchlaß wesentlich verringert wird. Derartige Schichten werden etwa dadurch erhalten, daß ein thermochromes Gel in den schmalen Spalt zwischen zwei Glasscheiben eingebracht wird. Im Ergebnis ist eine solche außenseitige Wandschale im Aufbau wesentlich aufwendiger als eine als übliche Verglasung ausgebildete Wandschale.

Ein in der Funktion ähnlicher Außenwandaufbau wie aus WO-82/03 100 ist aus EP-A-0 473 859 bekannt. Zwar besitzt hier die Isolierschicht keine veränderliche Wärmeleitfähigkeit, jedoch ist zwischen der absorbierenden Schicht und der Isolierschicht ein Spaltraum vorgesehen, in dem sich eine Wärmeträgerflüssigkeit befindet, die zwischen dem Spaltraum und einem in der massiven Wand ausgebildeten Leitungssystem zirkuliert und daher die Wärme aus der absorbierenden Schicht durch Konvektion direkt in die massive Wand transportiert.

Der Erfindung liegt die Aufgabe zugrunde, ein Außenwandelement so auszubilden, daß unter möglichst hoher Solarenergienutzung und Gewährleistung der Behaglichkeit im Rauminneren zu hohe, weil materialzerstörende Temperaturen an jeder Stelle innerhalb des Wandelements sicher vermieden werden, wobei die Bautiefe des Wandelements so gering wie möglich sein soll, insbesondere nicht größer, als die statischen Notwendigkeiten der tragenden Konstruktion, insbesondere beispielsweise deren Pfosten und Riegel, erfordern.

Bei dem erfindungsgemäßen Außenwandelement erfolgt die Absorption der einfallenden Sonnenstrahlung im wesentlichen in der die transparente äußere Wärmedämmschicht zur Seite der inneren Wärmedämmschicht hin begrenzenden absorbierenden Schicht, an der somit in der Regel die höchstmöglichen Temperaturen innerhalb des Außenwandelements auftreten. Diese Schicht kann sehr dünn sein, wenn sie nur für die Solarstrahlung undurchlässig ist. Der erfindungsgemäß gewollt verringerte g-Wert der außenseitigen Wandschale hat zwar eine geringere Aufnahme an Solarenergie im Außenwandelement zur Folge, gewährleistet aber, daß bei der höchstmöglichen Sonneneinstrahlung ein maximaler Temperaturwert an der absorbierenden Schicht nicht überschritten wird, so daß Materialzerstörungen durch Überhitzung nicht auftreten können. Die innenseitige Wandschale, also die innere Wärmedämmschicht und die Abschlußschicht, brauchen bezüglich ihres Wärmedurchgangswiderstands dann nur noch so ausgelegt zu werden, daß beim noch zulässigen Maximalwert der Temperatur an der absorbierenden Schicht die Temperatur an der Rauminnenseite der innenseitigen Wandschale und der an der Wandinnenseite zur Rauminnenluft hin auftretende, durch den Wärmeübergangswiderstand bedingte Temperatursprung in Bereichen liegen, die von im Rauminneren sich aufhaltenden Personen noch als behaglich empfunden werden. Dies läßt sich durch vergleichsweise geringe Dicke der inneren Wärmedämmschicht erreichen. Größere Werte des Wärmedurchgangswiderstands der inneren Wärmedämmschicht sind im Rahmen der Erfindung durchaus entbehrlich und würden nur unnötig die Dicke der inneren Wärmedämmschicht und/oder der Abschlußschicht und damit im Ergebnis die Bautiefe und den konstruktiven und kostenmäßigen Aufwand des erfindungsgemäßen Außenwandelements insgesamt vergrößern.

Die im Rahmen der Erfindung durch die gewollte Verringerung des g-Werts der außenseitigen Wandschale weniger aufgenommene Solarstrahlung wird durch die Anpassung des Wärmedurchgangskoeffizienten k dieser Wandschale optimal genutzt, indem der entsprechend verringerte k-Wert den Wärmeverlust von der absorbierenden Schicht nach außen durch die äußere transparente Wärmedämmschicht und die außenseitige Wandschale hindurch begrenzt. Es empfiehlt sich daher, daß die die äußere Wandschale bildende Verglasung von einzelnen Glasscheiben, gegebenenfalls mit innenseitiger Wärmeschutz-, insbesondere L-E-Schicht und/oder einer Sonnenschutzschicht gebildet ist. Eine andere sehr vorteilhafte Ausführungsform ist dadurch gekennzeichnet, daß die Verglasung von Isolierglaselementen aus jeweils zwei oder drei Glasscheiben gebildet ist. Im letzteren Fall können die Elemente reduzierte Scheibenzwischenräume aufweisen, um die Ausdehnungswirkung (Pumpwirkung) der in den Scheibenzwischenräumen vorhandenen Luft bei deren Erwärmung gering zu halten. Weiter empfiehlt es sich, die Glasscheiben der Isolierglaselemente auf einzelnen, mehreren oder allen Scheibenseiten (im folgenden als Positionen bezeichnet) mit Wärmeschutzbeschichtungen, insbesondere L-E-Schichten zu versehen. Außerdem sind die Isolierglaselemente bzw. ihre Glasscheiben zweckmäßigerweise mit Sonnenschutzschichten ausgestattet.

Solche Sonnenschutzschichten sind so zu optimieren, daß die Sonnenenergie erfindungsgemäß so viel wie möglich genutzt wird, ohne daß dabei zu hohe Temperaturen an der absorbierenden Beschichtung auftreten. Auch können die Scheibenzwischenräume der Isolierglaselemente Edelgasfüllungen aufweisen, was alles dazu dient, den Wärmedurchgangskoeffizienten den jeweiligen Gegebenheiten und Erfordernissen anzupassen, beispielsweise niedrigen g-Werten für Südorientierungen, mittleren g-Werten für Ost/West-Orientierungen, hohen g-Werten für Nordorientierungen des Außenwandelements.

Die außenseitige Wandschale kann aber auch aus Sondersystemen geeigneter Bauform gebildet sein, wie sie im allgemeinen aus zwei transparenten Glasscheiben und aus im Scheibenzwischenraum ausgebildeter Prismen- oder zur Scheibenebene etwa senkrechter Wabenstruktur besteht.

Eine besonders bevorzugte Ausführungsform der Erfindung ist dadurch gekennzeichnet, daß eine Wärmespeicherschicht auf der der transparenten inneren Wärmedämmschicht zugewandten Seite der innenseitigen Wandschale angeordnet ist.

Die Wärmespeicherschicht bringt bei dem erfindungsgemäßen Außenwandelement den Vorteil, daß die in der davor liegenden absorbierenden Schicht aufgenommene Solarenergie teilweise in der Speichermasse der Wärmespeicherschicht gespeichert und noch abgegeben wird, wenn sich das solare Energieangebot inzwischen verringert hat oder nicht mehr bestehen sollte. Je nach dem Wärmespeicher- und Wärmedämmvermögen der die Schichten in der innenseitigen Wandschale bildenden Speicher- und Dämmstoffe kann dabei in Abhängigkeit von den thermischen Eigenschaften der anderen, das Außenwandelement aufbauenden Teile, insbesondere der außenseitigen Wandschale und der transparenten äußeren Wärmedämmschicht, die Nutzung des solaren Energieangebots weiter verbessert werden, und zwar hinsichtlich der zu vermeidenden Überhitzungen im Wandelement als auch der zeitlichen Verschiebung in der Abgabe der gespeicherten Wärme gegenüber der tatsächlichen solaren Energieeinstrahlung. Denn die Wärmespeicherschicht ergibt unter sonst unveränderten Bedingungen eine niedrigere Temperatur an der absorbierenden Beschichtung, damit auch innerhalb des Außenwandelmeents überhaupt und an seiner Rauminnenseite, was dazu genutzt werden kann, den g-Wert der außenseitigen Wandschale zu erhöhen, um ohne Überschreiten der maximal zulässigen Temperatur an der absorbierenden Beschichtung das Solarenergieangebot besser auszuschöpfen. Im übrigen ist für die Wärmespeicherschicht eine möglichst optimale Wärmekapazität anzustreben, um das solare Energieangebot möglichst vollständig aufnehmen zu können, ohne daß unnötig große Temperaturdifferenzen entstehen. Besonders zweckmäßige Ausführungsformen sind dadurch gekennzeichnet, daß die Wärmespeicherschicht Speichermassen aus einer oder mehreren mineralischen Platten, Keramikplatten, aus Glas, aus Natur- oder Kunststoffen, insbesondere aus Kiesbeton besitzt. Auch können Speichermassen Verwendung finden, die als Latentwärmespeicher wirken, wie etwa Glaubersalz. Jedoch kann die Speichermasse der Wärmespeicherschicht auch aus Kunststoff, insbesondere aus einer oder mehreren Kunststoffplatten bestehen, denn Kunststoffe besitzen in der Regel eine etwa doppelt so große spezifische Wärme wie etwa Kiesbeton, was die im Vergleich zu schwereren Speichermassen geringere Dichte des Kunststoffs auszugleichen vermag, so daß sich etwa gleiche Speichervermögen für beispielsweise Kiesbeton und Kunststoff als Speichermasse ergeben können. Die oben erwähnten Speichermassen können erfindungsgemäß jeweils einzeln für sich oder gemischt im Verbund miteinander in der Wärmespeicherschicht zur Verwendung kommen.

Weiter empfiehlt sich für die Wärmespeicherschicht die Wahl von Speichermassen geringer Wärmeleitfähigkeit, damit die in ihr gespeicherte Wärme auch unabhängig von der Wärmedämmschichten nicht zu rasch an die Umgebung abgegeben wird, wenn die Temperaturen beidseits des Wandelements wieder absinken. Die Wärmespeicherschicht soll also nur langsam auskühlen. Daher ist auch zweckmäßigerweise die innere Wärmedämmschicht zwischen Wärmespeicherschicht und der Abschlußschicht der innenseitigen Wandschale angeordnet.

Die innere Wärmedämmschicht kann im einfachsten Fall von einer Luftschicht gebildet sein. Im allgemeinen enthält aber die innere Wärmedämmschicht vorzugsweise Dämmstoffe aus PUR-, PS-Schaum, Glasfasern, Mineralfasern oder dergl. Auch besteht die Möglichkeit die innere Wärmedämmschicht ihrerseits mehrschichtig mit einer oder mehreren Luftschichten mit Luftschichtdicken zwischen 5 und 50 mm, vorzugsweise 20 mm, aufzubauen. Größere Dicken dieser Luftschichten sollten vermieden werden, damit eine Wärmekonvektion durch in der Luftschicht zirkulierende Luft gering bleibt und die durch die Luftschicht bewirkte Wärmeisolierung nicht unnötig geschwächt wird. Die Abschlußschicht der innenseitigen Wandschale ist im allgemeinen dampfdicht ausgebildet. Sie kann ein Abschlußblech aus Metall, insbesondere Aluminium oder Stahl, aufweisen. Die Abschlußschicht kann auch eine Speichermasse, insbesondere Beton, enthalten, was sich in besonders einfacher Weise beispielsweise dadurch verwirklichen läßt, daß die Speichermasse unmittelbar von der Betonbrüstung der Gebäudewand gebildet ist.

Hinsichtlich der Ausbildung der an die innenseitige Wandschale angrenzenden äußeren transparenten Wärmedämmschicht bestehen im Rahmen der Erfindung ebenfalls verschiedene Möglichkeiten. So kann diese transparente Wärmedämmschicht in einfachster Ausführungsform von einer Luftschicht in einer Schichtdicke von wiederum 5 bis 50 mm, insbesondere 20 mm, gebildet sein. Die Luftschicht kann unmittelbar an die absorbierende Schicht grenzen. Zwischen der Luftschicht und der absorbierenden Schicht kann aber auch eine Glasscheibe eingeschaltet sein. Die transparente äußere Wärmedämmschicht kann aber auch von Kapillarplatten aus transparenten Kunststoffen mit einer zur Schichtebene senkrechten Waben- oder Kammerstruktur gebildet sein, wie sie etwa aus Bauphysik 13 (1991), H. 6, S. 217-224 "Transparente Wärmedämmung, Materialien, Systemtechnik und Anwendung" bekannt sind und daher hier keiner weiteren Beschreibung bedürfen. Auch kann die äußere transparente Wärmedämmschicht aus Glaswolle und/oder Acrylharzschaum, jeweils einzeln oder in Verbindung miteinander, als Dämmstoff bestehen.

Durch die absorbierende Schicht kann im übrigen in Verbindung mit dem erfindungsgemäß bewußt verringerten g-Wert des Außenwandelements dessen äußeres Erscheinungsbild optimiert werden, worin ein weiterer wichtiger Vorteil der Erfindung zu sehen ist. Die kleinen g-Werte veringern nämlich erheblich die Durchsicht durch die außenseitige Wandschale, erschweren also die Durchsicht auf den Aufbau des Außenwandelements hinter der außenseitigen Wandschale, wodurch Anforderungen an die Ästhetik des Erscheinungsbildes leichter erfüllt werden kann.

Handelt es sich insbesondere um ein Außenwandelement mit an die absorbierende Schicht anschließender Wärmespeicherschicht, kann eine zweckmäßige Ausführungsform der Verglasung von einzelnen Klarglasscheiben oder von Isolierglaselementen aus jeweils zwei Klarglasscheiben gebildet sein.

Im folgenden wird die Erfindung an in der Zeichnung dargestellten Ausführungsbeispielen näher erläutert; es zeigen:
- Fig. 1: einen Querschnitt durch den Schichtenaufbau eines erfindungsgemäßen Paneels in nur schematischer Darstellung,
- Fig. 2: eine andere Ausführungsform des Paneels in einer der Fig. 1 entsprechenden Darstellung,
- Fig. 3: den Schichtenaufbau lediglich der außenseitigen Wandschale in einer schematischen Darstellungsweise.

In der Zeichnung ist die außenseitige, Solarstrahlung aufnehmende Wandschale allgemein mit 10, die innenseitige Wandschale insgesamt mit 20 bezeichnet. Zwischen beiden befindet sich eine an die außenseitige Wandschale 10 unmittelbar angrenzende transparente äußere Wärmedämmschicht 30, während die innenseitige Wandschale 20 mehrschichtig mit einer Wärmespeicherschicht 21 und einer inneren Wärmedämmschicht 22 aufgebaut ist, wobei die Wärmespeicherschicht 21 auf der der transparenten Wärmedämmschicht 30 zugewandten Seite der innenseitigen Wandschale 20 angeordnet ist. Die Speichermasse dieser Wärmespeicherschicht 21 kann unterschiedlich ausgebildet sein, beispielsweise aus mineralischen Platten, Keramikplatten, aus Glas oder aus Natur- oder Kunststein, in letzterem Fall insbesondere aus Kiesbeton bestehen, aber auch aus Kunststoff, insbesondere aus einer oder mehreren Kunststoffplatten aufgebaut sein, was aber im einzelnen in der Zeichnung nicht dargestellt ist. Im übrigen besitzt die innenseitige Wandschale 20 eine das Außenwandelement auf der Innenseite begrenzende Abschlußschicht 23, auf deren der außenseitigen Wandschale 10 zugewandten Seite die Wärmedämmschicht 22 angeordnet ist, die sich im Ergebnis zwischen der Wärmespeicherschicht 21 und der Abschlußschicht 23 befindet. Die Wärmedämmschicht 22 kann PUR-, PS-Schaum, Glasfasern, Mineralfasern oder dergl. als Dämmstoffe enthalten. Die Wärmedämmschicht 22 kann auch ihrerseits mit einer oder mehreren Luftschichten mit jeweils Luftdichtschichten zwischen 10 und 50 mm, vorzugsweise 20 mm, aufgebaut sein, was wiederum in der Zeichnung nicht dargestellt ist. In jedem Fall sollte die Abschlußschicht 23 selbst dampfdicht ausgebildet sein. Sie kann aus einem Abschlußblech aus Metall, wie Aluminium oder Stahl, bestehen, aber auch ihrerseits eine Speichermasse, insbesondere Beton aufweisen.

Die transparente Wärmedämmschicht 30 kann im einfachsten Fall von einer Luftschicht in Schichtdicken wiederum von 5 mm bis 50 mm, insbesondere von 20 mm, gebildet sein. Im Auch kann die transparente Wärmedämmschicht 30 von Kapillarplatten aus transparenten Kunststoffen mit einer zur Schichtebene senkrechten Waben- oder Kammerstruktur gebildet sein, was wiederum in der Zeichnung der Einfachheit wegen nicht dargestellt ist. Im übrigen besteht die Möglichkeit, die transparente Wärmedämmschicht 30 aus Glaswolle, Acrylharzschaum oder dergl. transparenten Stoffen aufzubauen. Auf der der transparenten Wärmedämmschicht 30 zugewandten Seite trägt die innenseitige Wandschale 20, nämlich die Wärmespeicherschicht 21, eine die Strahlung absorbierende, gegebenenfalls spektral selektiv absorbierende, strahlungsundurchlässige Schicht 21', die als dünne Beschichtung ausgebildet sein kann.

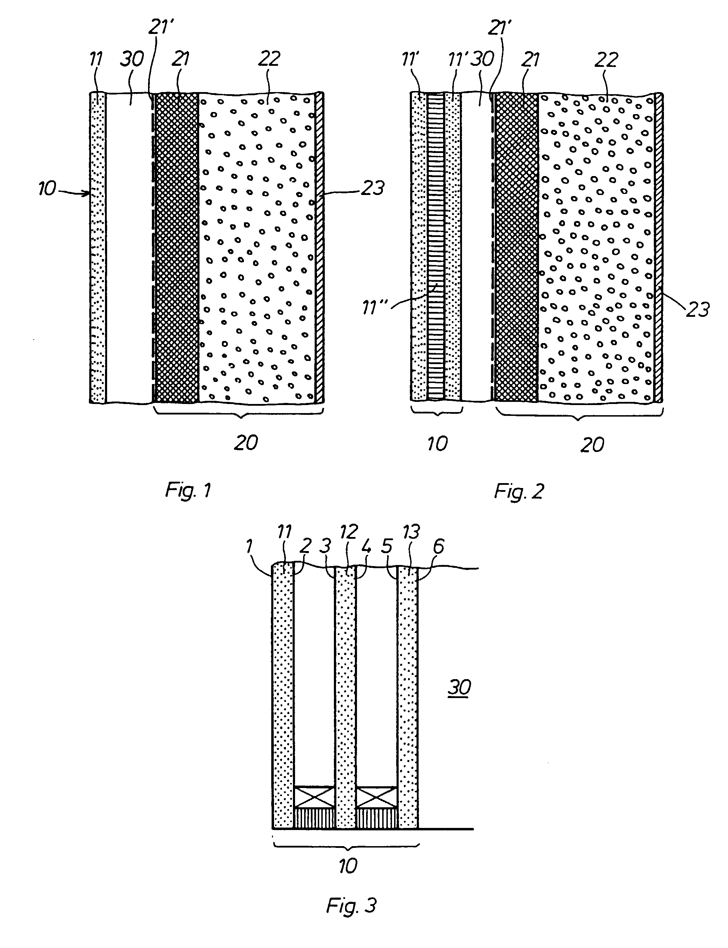

Die außenseitige Wandschale 10 ist durch eine Verglasung gebildet, die zur Verringerung des g-Wertes mit einer oder mehreren Sonnenschutzbeschichtungen versehen sein kann. Im Fall eines Außenwandelementes 10 mit an die transparente Wärmedämmschicht 30 anschließender Wärmespeicherschicht 21 kann die Verglasung entweder aus einzelnen Klarglasscheiben oder aus Isolierglaselementen aus jeweils zwei oder mehr Klarglasscheiben bestehen. Im allgemeinen ist die Verglasung von einzelnen Glasscheiben 11, gegebenenfalls mit innenseitiger Wärmeschutz-, insbesondere L-E- Beschichtung und/oder Sonnenschutzschichten gebildet, was einen niedrigen k-Wert ergibt. Weiter kann die Verglasung von Isolierglaselementen aus jeweils zwei oder drei Glasscheiben 11, 12, 13 gebildet sein, wobei die Isolierglaselemente reduzierte Scheibenzwischenräume aufweisen können. Die Glasscheiben 11, 12, 13 können auch auf einzelnen, mehreren oder allen Scheibenseiten Wärmeschutzbeschichtungen, insbesondere L-E-Schichten, aufweisen, wobei an offenliegenden Scheibenflächen die L-E-Schichten z. B. von pyrolytisch aufgebrachten Zinnoxidschichten gebildet sein können. Weiter besteht die Möglichkeit, daß die Isolierglaselemente bzw. ihre Glasscheiben 11, 12, 13 mit Sonnenschutzbeschichtungen ausgestattet sind. Die Scheibenzwischenräume können im übrigen Edelgasfüllungen aufweisen. Im Ergebnis empfehlen sich im Rahmen der Erfindung zur jeweils optimalen Anpassung des k-Wertes und des g-Wertes (Gesamtenergiedurchlaßgrad) an die jeweils bestehenden Erfordernisse, vor allem hinsichtlich der an der absorbierenden Beschichtung 21' auftretenden Maximaltemperatur, als besonders zweckmäßig die folgenden, anhand der Fig. 3 näher erläuterten Kombinationen:
1. Einscheibenverglasung aus einer Wärmeschutz- und Sonnenschutzglasscheibe 11 mit Sonnenschutzschicht auf der Position 1, für gewollt reduzierten g-Wert, und einer L-E-Schicht auf der Position 2,
2. Zweischeibenisolierverglasung aus zwei Glasscheiben 11, 12 und Sonnenschutzschicht, wie beispielsweise
   Sonnenschutzschicht auf Position 2,
   Wärmeschutzschicht (L-E) auf Position 3,
   oder
   Sonnenschutzschicht auf Position 2,
   Wärmeschutzschicht (L-E) auf den Position 3 und 4, wobei die Wärmeschutzschicht auf Position 4 aus einer pyrolytisch aufgebrachten Zinnoxidschicht besteht,
   oder
   Sonnenschutzschicht plus Wärmeschutzschicht auf Position 2, Wärmeschutzschicht (K) auf Position 4,
   jeweils mit oder ohne Edelgasfüllung in den Scheibenzwischenräumen.
3. Dreischeibenisolierverglasung aus Glasscheiben 11, 12, 13 mit
   Sonnenschutzschicht auf Position 2,
   Wärmeschutzschicht auf Position 3,
   Wärmeschutzschicht auf Position 5,
   oder
   Sonnenschutzschicht auf Position 2,
   Wärmeschutzschicht auf Position 3,
   Wärmeschutzschicht auf Position 5,
   Wärmeschutzschicht auf Position 6,
   oder
   Sonnen- und Wärmeschutzschicht auf Position. 2, Wärmeschutzschicht auf Position 5
   oder
   Sonnen- und Wärmeschutzschicht auf Position 2,
   Wärmeschutzschicht auf Position 5,
   Wärmeschutzschicht auf Position 6.
   jeweils mit oder ohne Edelgasfüllung in den Scheibenzwischenräumen.

Die außenseitige Wandschale 10 kann auch entsprechend der Ausführungsform in Fig. 2 aus zwei transparenten Glasscheiben 11' und aus im Scheibenzwischenraum ausgebildeter Prismen- oder zur Scheibenebene etwa senkrechter Wabenstruktur 11" bestehen.

## Patentansprüche

1. Außenwandelement für Gebäude, insbesondere Brüstung oder Paneel im Brüstungsbereich einer Gebäudewand, bei dem zur Nutzung der Solarenergie zwischen einer als Verglasung ausgebildeten, außenseitigen, Solarstrahlung aufnehmenden Wandschale (10) und einer innenseitigen Wandschale (20) eine an die außenseitige Wandschale (10) angrenzende transparente, äußere Wärmedämmschicht (30) vorgesehen ist und die innenseitige Wandschale (20) eine das Außenwandelement auf der Innenseite begrenzende Abschlußschicht (23) und eine innere Wärmedämmschicht (22) aufweist, die auf der der außenseitigen Wandschale (10) zugewandten Seite der Abschlußschicht (23) angeordnet ist, wobei ferner die innenseitige Wandschale (20) auf ihrer der äußeren transparenten Wärmedämmschicht (30) zugewandten Seite durch eine die aufgenommene Solarstrahlung aus der äußeren Wärmedämmschicht (30) absorbierende Schicht (21') begrenzt ist, und wobei der Gesamtenergiedurchlaßgrad g der außenseitigen Wandschale (10) soweit reduziert wird, daß bei der am Einbauort zu erwartenden höchstmöglichen Sonneneinstrahlung ein maximaler Temperaturwert an der absorbierenden Schicht (21') nicht überschritten wird, wobei der Wärmedurchgangskoeffizient k der außenseitigen Wandschale (10) dem verringerten g-Wert so angepaßt wird, daß die Solarenergie so viel wie möglich genutzt wird.

2. Außenwandelement nach Anspruch 1, dadurch gekennzeichnet, daß die Verglasung von einzelnen Glasscheiben (11), gegebenenfalls mit innenseitiger Wärmeschutz-, insbesondere L-E- Schicht und/oder einer Sonnenschutzschicht gebildet ist.

3. Außenwandelement nach Anspruch 1, dadurch gekennzeichnet, daß die Verglasung von Isolierglaselementen aus jeweils zwei oder drei Glasscheiben (11, 12, 13) gebildet ist.

4. Außenwandelement nach Anspruch 3, dadurch gekennzeichnet, daß die Isolierglaselemente reduzierte Scheibenzwischenräume aufweisen.

5. Außenwandelement nach Anspruch 3 oder 4, dadurch gekennzeichnet, daß die Glasscheiben (11, 12, 13) auf einzelnen, mehreren oder allen Positionen (1 bis 6) Wärmeschutzbeschichtungen, insbesondere L-E-Schichten aufweisen.

6. Außenwandelement nach einem der Ansprüche 3 bis 5, dadurch gekennzeichnet, daß die Isolierglaselemente bzw. ihre Glasscheiben (11, 12, 13) mit Sonnenschutzschichten ausgestattet sind.

7. Außenwandelement nach einem der Ansprüche 3 bis 6, dadurch gekennzeichnet, daß die Scheibenzwischenräume der Isolierglaselemente Edelgasfüllungen aufweisen.

8. Außenwandelement nach Anspruch 1, dadurch gekennzeichnet, daß die außenseitige Wandschale (10) aus zwei transparenten Glasscheiben (11') und aus im Scheibenzwischenraum ausgebildeter Prismen- und/oder zur Scheibenebene etwa senkrechter Wabenstruktur (11") zur gerichteten Lenkung des einfallenden Lichtstroms besteht.

9. Außenwandelement nach einem der Ansprüche 1 bis 8, dadurch gekennzeichnet, daß eine Wärmespeicherschicht (21) auf der der transparenten inneren Wärmedämmschicht (30) zugewandten Seite der innenseitigen Wandschale (20) angeordnet ist.

10. Außenwandelement nach Anspruch 9, dadurch gekennzeichnet, daß die Wärmespeicherschicht (21) eine Speichermasse aus einer oder mehreren mineralischen Platten besitzt.

11. Außenwandelement nach Anspruch 9 oder 10, dadurch gekennzeichnet, daß die Wärmespeicherschicht (21) eine Speichermasse aus einer oder mehreren Keramikplatten besitzt.

12. Außenwandelement nach einem der Ansprüche 9 bis 11, dadurch gekennzeichnet, daß die Wärmespeicherschicht (21) eine Speichermasse aus Glas besitzt.

13. Außenwandelement nach einem der Ansprüche 9 bis 12, dadurch gekennzeichnet, daß die Wärmespeicherschicht (21) eine Speichermasse aus Natur- oder Kunststein besitzt.

14. Außenwandelement nach Anspruch 13, dadurch gekennzeichnet, daß die Wärmespeicherschicht (21) eine Speichermasse aus Beton besitzt.

15. Außenwandelement nach einem der Ansprüche 9 bis 14, dadurch gekennzeichnet, daß die Wärmespeicherschicht (21) eine Speichermasse aus Kunststoff, insbesondere aus einer oder mehreren Kunststoffplatten besitzt.

16. Außenwandelement nach einem der Ansprüche 9 bis 15, dadurch gekennzeichnet, daß die Wärmespeicherschicht (21) aus einer Speichermasse geringer Wärmeleitfähigkeit besteht.

17. Außenwandelement nach einem der Ansprüche 9 bis 16, dadurch gekennzeichnet, daß die innere Wärmedämmschicht (22) zwischen der Wärmespeicherschicht (21) und der Abschlußschicht (23) angeordnet ist.

18. Außenwandelement nach einem der Ansprüche 1 bis 17, dadurch gekennzeichnet, daß die innere Wärmedämmschicht (22) Dämmstoffe aus PUR-, PS-Schaum, Glasfaser, Mineralfaser oder dergl. enthält.

19. Außenwandelement nach einem der Ansprüche 1 bis 18, dadurch gekennzeichnet, daß die Wärmedämmschicht (22) ihrerseits mehrschichtig mit einer oder mehreren Luftschichten mit Luftschichtdicken zwischen 10 und 50 mm, vorzugsweise 20 mm, aufgebaut ist.

20. Außenwandelement nach einem der Ansprüche 1 bis 19, dadurch gekennzeichnet, daß die Abschlußschicht (23) dampfdicht ausgebildet ist.

21. Außenwandelement nach Anspruch 20, dadurch gekennzeichnet, daß die Abschlußschicht (23) ein Abschlußblech aus Metall (Aluminium oder Stahl) aufweist.

22. Außenwandelement nach Anspruch 20 oder 21, dadurch gekennzeichnet, daß die Abschlußschicht (23) eine Speichermasse, insbesondere Beton, enthält.

23. Außenwandelement nach einem der Ansprüche 1 bis 22, dadurch gekennzeichnet, daß die äußere transparente Wärmedämmschicht (30) von einer Luftschicht in einer Schichtdicke von 10 mm bis 50 mm, insbesondere 20 mm, gebildet ist.

24. Außenwandelement nach einem der Ansprüche 1 bis 22, dadurch gekennzeichnet, daß die transparente Wärmedämmschicht (30) von Kapillarplatten aus transparenten Kunststoffen mit einer zur Schichtebene senkrechten Waben- oder Kammerstruktur gebildet ist.

25. Außenwandelement nach einem der Ansprüche 1 bis 22, dadurch gekennzeichnet, daß die transparente Wärmedämmschicht (30) aus Glaswolle als Dämmstoff besteht.

26. Außenwandelement nach einem der Ansprüche 1 bis 22, dadurch gekennzeichnet, daß die transparente Wärmedämmschicht (30) aus Acrylharzschaum als Dämmstoff besteht.

27. Außenwandelement nach einem der Ansprüche 1 bis 26, dadurch gekennzeichnet, daß vorzugsweise bei einem Außenwandelement mit an die absorbierende Beschichtung (21) anschließender Wärmespeicherschicht (21) die Verglasung von einzelnen Klarglasscheiben oder von Isolierglaselementen aus jeweils zwei Klarglasscheiben gebildet ist.

## Claims

1. An external wall element for buildings, in particular a parapet or panel in the parapet region of a building wall, in which to make use of solar energy provided between an outside solar radiation-receiving wall shell (10) which is in the form of glazing and an inside wall shell (20) is a transparent outer heat-insulating layer (30) adjoining the outside wall shell (10) and the inside wall shell (20) has a cover layer (23) delimiting the external wall element on the inside and an inner heat-insulating layer (22) which is arranged on the side of the cover layer (23), that is towards the outside wall shell (10), wherein moreover the inside wall shell (20), on its side that is towards the outer transparent heat-insulating layer (30), is delimited by a layer (21') for absorbing the received solar radiation from the outer heat-insulating layer (30), and wherein the total degree g of energy transmission of the outside wall shell (10) is reduced to such an extent that with the highest possible incident solar radiation to be expected at the location of installation a maximum temperature value at the absorbent layer (21') is not exceeded, wherein the heat transfer coefficient k of the outside wall shell (10) is so adapted to the reduced g-value that the solar energy is used as much as possible.

2. An external wall element according to claim 1 characterised in that the glazing is formed by individual glass panes (11), possibly with an inside heat-insulation, in particular L-E-layer and/or a sun-protection layer.

3. An external wall element according to claim 1 characterised in that the glazing is formed by insulating glass elements each comprising two or three glass panes (11, 12, 13).

4. An external wall element according to claim 3 characterised in that the insulating glass elements have reduced inter-pane spaces.

5. An external wall element according to claim 3 or claim 4 characterised in that the glass panes (11, 12, 13) have heat-insulation coatings, in particular L-E-layers, on individual, a plurality of or all positions (1 to 6).

6. An external wall element according to one of claims 3 to 5 characterised in that the insulating glass elements or their glass panes (11, 12, 13) are provided with sun protection layers.

7. An external wall element according to one of claims 3 to 6 characterised in that the inter-pane spaces of the insulating glass elements have inert-gas fillings.

8. An external wall element according to claim 1 characterised in that the outside wall shell (10) comprises two transparent glass panes (11') and a prism structure provided in the inter-pane space and/or a honeycomb structure (11') substantially perpendicular to the plane of the pane, for directed guidance of the incident light flux.

9. An external wall element according to one of claims 1 to 8 characterised in that a heat-storage layer (21) is arranged on the side of the inside wall shell (20), that is towards the transparent inner heat-insulating layer (30).

10. An external wall element according to claim 9 characterised in that the heat-storage layer (21) has a storage mass comprising one or more mineral plates.

11. An external wall element according to claim 9 or claim 10 characterised in that the heat-storage layer (21) has a storage mass comprising one or more ceramic plates.

12. An external wall element according to one of claims 9 to 11 characterised in that the heat-storage layer (21) has a storage mass of glass.

13. An external wall element according to one of claims 9 to 12 characterised in that the heat-storage layer (21) has a storage mass of natural or artificial stone.

14. An external wall element according to claim 13 characterised in that the heat-storage layer (21) has a storage mass of concrete.

15. An external wall element according to one of claims 9 to 14 characterised in that the heat-storage layer (21) has a storage mass of plastics material, in particular one or more plastics plates.

16. An external wall element according to one of claims 9 to 15 characterised in that the heat-storage layer (21) comprises a storage mass of low thermal conductivity.

17. An external wall element according to one of claims 9 to 16 characterised in that the inner heat-insulating layer (22) is arranged between the heat-storage layer (21) and the cover layer (23).

18. An external wall element according to one of claims 1 to 17 characterised in that the inner heat-insulating layer (22) includes insulating substances of PUR- and PS-foam, glass fibre, mineral fibre or the like.

19. An external wall element according to one of claims 1 to 18 characterised in that the heat-insulating layer (22) is in turn of a multi-layer structure with one or more layers of air with air layer thicknesses of between 10 and 50 mm, preferably 20 mm.

20. An external wall element according to one of claims 1 to 19 characterised in that the cover layer (23) is vapour-tight.

21. An external wall element according to claim 20 characterised in that the cover layer (23) has a cover sheet of metal (aluminium or steel).

22. An external wall element according to claim 20 or 21 characterised in that the cover layer (23) includes a storage mass, in particular concrete.

23. An external wall element according to one of claims 1 to 22 characterised in that the outer transparent heat-insulating layer (30) is formed by a layer of air of a thickness of 10 mm to 50 mm, in particular 20 mm.

24. An external wall element according to one of claims 1 to 22 characterised in that the transparent heat-insulating layer (30) is formed by capillary plates of transparent plastics materials with a chamber or honeycomb structure which is perpendicular to the plane of the layer.

25. An external wall element according to one of claims 1 to 22 characterised in that the transparent heat-insulating layer (30) comprises glass wool as the insulating material.

26. An external wall element according to one of claims 1 to 22 characterised in that the transparent heat-insulating layer (30) comprises acrylic resin foam as the insulating material.

27. An external wall element according to one of claims 1 to 26 characterised in that preferably in the case of an external wall element with a heat-storage layer (21) adjoining the absorbent coating (21) the glazing is formed by individual clear glass panes or insulating glass elements each comprising two clear glass panes.

## Revendications

1. Elément de mur extérieur pour bâtiment, notamment garde-corps ou panneau dans la zone du garde-corps d'un mur de bâtiment, dans lequel pour utiliser l'énergie solaire, entre une paroi extérieure (10) du mur, qui est agencée sous la forme d'un vitrage et reçoit le rayonnement solaire, et une paroi intérieure (20) du mur est disposée une couche extérieure transparente d'isolation thermique (30), qui jouxte la paroi extérieure (10) du mur et dans lequel la paroi intérieure (20) du mur possède une couche terminale (23) qui délimite l'élément de mur extérieur sur son côté intérieur, et une couche intérieure d'isolation thermique (22), qui est disposée sur la face de la couche terminale (23), tournée vers la paroi extérieure (10) du mur, et dans lequel en outre la paroi intérieure (20) du mur est délimitée, sur sa face tournée vers la couche transparente extérieure d'isolation thermique (30), par une couche (21'), qui absorbe le rayonnement solaire reçu, à partir de la couche extérieure d'isolation thermique (30), et dans lequel le degré g de transmission d'énergie totale de la paroi extérieure (10) du mur est réduit au point que, dans le cas du rayonnement solaire incident maximum possible auquel on peut s'attendre à l'emplacement de montage, une valeur de température maximale n'est pas dépassée au niveau de la couche absorbante (21'), le coefficient de transfert de chaleur k de la paroi extérieure (10) du mur étant adapté à la valeur g réduite de sorte que l'énergie solaire est utilisée au degré maximum possible.

2. Elément de mur extérieur selon la revendication 1, caractérisé en ce que le vitrage est formé de vitres individuelles (11), comportant éventuellement une couche de protection thermique intérieure, notamment une couche L-E, et/ou une couche de protection contre le soleil.

3. Elément de paroi extérieur selon la revendication 1, caractérisé en ce que le vitrage est formé par des éléments de verre isolant constitués chacun de deux ou trois vitres (11,12,13).

4. Elément de mur extérieur selon la revendication 3, caractérisé en ce que les éléments de verre isolant sont séparés par des espaces intercalaires réduits.

5. Elément de mur extérieur selon la revendication 3 ou 4, caractérisé en ce que les vitres (11,12,13) comportent des revêtements de protection contre la chaleur, notamment des couches L-E, en des emplacements individuels, en plusieurs emplacements ou en tous les emplacements (1 à 6).

6. Elément de mur selon l'une des revendications 3 à 5, caractérisé en ce que les éléments de verre isolant ou leurs vitres (11,12,13) sont pourvus de couches de protection contre le soleil.

7. Elément de mur extérieur selon l'une des revendications 3 à 6, caractérisé en ce que les espaces intercalaires entre les vitres des éléments de verre isolant sont remplis par un gaz rare.

8. Elément de mur extérieur selon la revendication 1, caractérisé en ce que la paroi extérieure (10) du mur est constituée par deux vitres transparentes (11') et par une structure à prismes formée dans l'espace intercalaire entre les vitres, et/ou une structure en nid d'abeilles (11") approximativement perpendiculaire au plan des vitres, de manière à dévier de façon orientée le flux de lumière incident.

9. Elément de mur extérieur selon l'une des revendications 1 à 8, caractérisé en ce qu'une couche d'accumulation de chaleur (21) est disposée sur la face tournée vers la couche intérieure transparente d'isolation thermique (30) de la paroi intérieure (20) du mur.

10. Elément de paroi extérieur selon la revendication 9, caractérisé en ce que la couche d'accumulation thermique (21) possède une masse d'accumulation formée par une ou plusieurs plaques minérales.

11. Elément de mur extérieur selon la revendication 9 ou 10, caractérisé en ce que la couche d'accumulation de chaleur (21) possède une masse d'accumulation formée d'une ou de plusieurs plaques céramiques.

12. Elément de mur extérieur selon l'une des revendications 9 à 11, caractérisé en ce que la couche d'accumulation de chaleur (21) possède une masse d'accumulation formée de verre.

13. Elément de mur extérieur selon l'une des revendications 9 à 12, caractérisé en ce que la couche d'accumulation de chaleur (21) possède une masse d'accumulation formée d'une pierre naturelle ou d'une pierre artificielle.

14. Elément de mur extérieur selon la revendication 13, caractérisé en ce que la couche d'accumulation de chaleur (21) possède une masse d'accumulation en béton.

15. Elément de mur extérieur selon l'une des revendications 9 à 14, caractérisé en ce que la couche d'accumulation de chaleur (21) comporte une masse d'accumulation formée d'une matière plastique, notamment une ou plusieurs plaques de matière plastique.

16. Elément de mur extérieur selon l'une des revendications 9 à 15, caractérisé en ce que la couche d'accumulation de chaleur (21) est constituée par une masse d'accumulation possédant une faible conductibilité thermique.

17. Elément de mur extérieur selon l'une des revendications 9 à 16, caractérisé en ce que la couche intérieure d'isolation thermique (22) est disposée entre la couche d'accumulation de chaleur (21) et la couche terminale (23).

18. Elément de mur extérieur selon l'une des revendications 1 à 17, caractérisé en ce que la couche intérieure d'isolation thermique (22) contient des matériaux d'isolation formés d'une mousse de PUR, d'une mousse de PS, de fibres de verre, de fibres minérales ou analogues.

19. Elément de mur extérieur selon l'une des revendications 1 à 18, caractérisé en ce que la couche d'isolation thermique (22) est constituée pour sa part de plusieurs couches comprenant une ou plusieurs couches d'air ayant des épaisseurs comprises entre 10 et 50 mm et de préférence égales à 20 mm.

20. Elément de mur extérieur selon l'une des revendications 1 à 19, caractérisé en ce que la couche terminale (23) est agencée de manière à être étanche à la vapeur.

21. Elément de mur extérieur selon la revendication 20, caractérisé en ce que la couche terminale (23) possède une tôle de fermeture en métal (aluminium ou acier).

22. Elément de mur extérieur selon la revendication 20 ou 21, caractérisé en ce que la couche terminale (23) contient une masse d'accumulation, notamment en béton.

23. Elément de mur extérieur selon l'une des revendications 1 à 22, caractérisé en ce que la couche extérieure transparente d'isolation thermique (30) est formée par une couche d'air possédant une épaisseur comprise entre 10 mm et 50 mm et égale notamment à 20 mm.

24. Elément de mur extérieur selon l'une des revendications 1 à 22, caractérisé en ce que la couche transparente d'isolation thermique (30) est formée de plaques capillaires réalisées en des matières plastiques transparentes et possédant une structure en nid d'abeilles ou une structure alvéolaire, perpendiculaire au plan de la couche.

25. Elément de mur extérieur selon l'une des revendications 1 à 22, caractérisé en ce que la couche transparente d'isolation thermique (30) est formée de laine de verre en tant que matériau isolant.

26. Elément de mur extérieur selon l'une des revendications 1 à 22, caractérisé en ce que la couche transparente d'isolation thermique (30) est formée d'une mousse de résine acrylique en tant que matériau isolant.

27. Elément de mur extérieur selon l'une des revendications 1 à 26, caractérisé en ce que de préférence dans le cas d'un élément de mur extérieur comportant une couche d'accumulation de chaleur (21) qui jouxte le revêtement absorbant (21), le vitrage est formé de vitres individuelles en verre clair ou d'éléments de verre isolant formés chacun de deux vitres en verre clair.
